Europäisches Patentamt

European Patent Office

Office européen des brevets

(11) Veröffentlichungsnummer: **0 177 718**
**B1**

(12) **EUROPÄISCHE PATENTSCHRIFT**

(45) Veröffentlichungstag der Patentschrift:
06.12.89

(51) Int. Cl.⁴: **G01N 15/14**

(21) Anmeldenummer: 85110397.8

(22) Anmeldetag: 20.08.85

(54) Verfahren und Vorrichtung zur Sortierung von mikroskopischen Partikeln.

(30) Priorität: 11.09.84 CH 4326/84

(43) Veröffentlichungstag der Anmeldung:
16.04.86 Patentblatt 86/16

(45) Bekanntmachung des Hinweises auf die Patenterteilung:
06.12.89 Patentblatt 89/49

(84) Benannte Vertragsstaaten:
AT BE CH DE FR GB IT LI LU NL SE

(56) Entgegenhaltungen:
DE-A- 2 246 380
GB-A- 1 389 553
US-A- 3 560 754
US-A- 3 710 933
US-A- 3 827 555

(73) Patentinhaber: Partec AG, Sonnenweg 7,
CH-4144 Arlesheim(CH)

(72) Erfinder: Göhde, Hildegard, Dr., Heller 26,
D-4405 Nottuln(DE)
Erfinder: Schumann, Johannes, Dr.,
Gertrudenstrasse 18, D-4400 Münster(DE)

(74) Vertreter: Meyer, Ludgerus et al, Patentanwälte Meyer,
Stach, Vonnemann Jungfernstieg 38,
D-2000 Hamburg 36(DE)

## Beschreibung

Die vorliegende Erfindung betrifft ein Verfahren zum automatischen Sortieren von mikroskopischen Partikeln, bei dem die Partikel in einer Flüssigkeit suspendiert durch einen geschlossenen Kanal geführt werden und dabei eine Meßstelle, an der die auszusortierenden Partikel ein Signal zur Erzeugung einer Druckwelle auslösen, und eine anschließende Verzweigung passieren, sowie eine Sortiervorrichtung zur Durchführung des Verfahrens mit einem Zuführkanal für den Partikelstrom, einem Meßkanal, einer im Meßkanal angeordneten Meßstelle, einer Verzweigung des Meßkanals in einen Sortierkanal und einen Abfallkanal und einem Druckwellengenerator.

Es gibt mikrophotometrische Verfahren zur Messung morphologischer und biochemischer Eigenschaften von makroskopischen Partikeln, Zellen, Blutzellen, Tumorzellen etc. Diese Verfahren basieren darauf, daß in einem photometrischen Apparat Licht, das von jedem einzelnen in Flüssigkeit suspendierten und durch eine Meßstelle, die Durchflußkammer, hindurchgesaugten oder -gedrückten Partikel ausgeht, mit Hilfe lichtempfindlicher Detektoren (Photomultiplier, Photozelle) erfaßt und entsprechend seiner Intensität und/oder zeitlichen Verteilung gemessen wird. Das Ergebnis solcher Messungen an einzelnen Zellen sind Histogramme (Impulshöhenverteilungen). Derartige Verfahren erlauben die Messung von bis zu einigen tausend Zellen pro Sekunde. Das Hauptanwendungsgebiet ist die Zellbiologie und hier insbesondere die Krebszellforschung sowie die experimentelle oder quantitative Zytologie.

Es wurden zusätzlich Verfahren vorgeschlagen, die Zellen zunächst einzeln zu vermessen bzw. deren biochemische oder morphologische Eigenschaften zu messen und unmittelbar im Anschluß daran diese aufgrund vorwählbarer Kriterien zu sortieren. Solche Sortiervorrichtungen arbeiten z.B. nach folgendem Prinzip: Nach der Erfassung der Partikeleigenschaft innerhalb der Durchflußkammer oder in einem feinen freien eine Porenöffnung verlassenden Strahl wird der Suspensionsstrahl mit Hilfe eines Piezo-Transducers in homogene feine Tröpfchen mit einigen μm bis zu einigen 10 μm Durchmesser zerlegt. Unter der Annahme, daß sich zu einer bestimmten Zeit nach der photometrischen Messung eine bestimmte auszusortierende Zelle im Suspensionsstrahl unmittelbar vor der Loslösung dieses partikeltragenden Flüssigkeitsanteils als Tröpfchen befindet, wird der Flüssigkeitsstrahl elektrisch geladen. Das bedeutet, daß auch das unmittelbar danach sich loslösende Tröpfchen geladen ist. Die Kette der geladenen und ungeladenen Tröpfchen wird nun an einem elektrostatisch geladenen Elektrodenpaar vorbeigeführt. Hier werden nur die geladenen Tröpfchen in der gewünschten Weise abgelenkt und in einem Gefäß aufgefangen. Es sind Vorrichtungen bekannt, diese Zellen sogleich in Kulturgefäßen zu deponieren, um z.B. Zellinien zu züchten, die auf jeweils eine aussortierte besondere Zelle zurückgehen. Derartige Verfahren werden z.B. in der Gentechnologie eingesetzt.

Im Unterschied zu diesem "offenen" Sortiersystem wurden auch geschlossene Anordnungen vorgeschlagen (Zöld, oder Wiecorek oder Kamentsky). Die von Kamentsky (US 3 827 555) beschriebene Anordnung benutzt einen Piezo-Transducer zur kurzzeitigen Störung eines Partikelstromes, der, umgeben von teilchenfreier Lösung, eine Meßkammer passiert. Jede von einem interessierenden Partikel initiierte Störung des Partikelstromes soll dazu führen, daß das betreffende Partikel in den an sich teilchenfreien Hüllstrom gelangt, von wo es in eine separate Auffangvorrichtung geleitet wird.

Die von Wiecorek et al. beschriebene Vorrichtung bedient sich eines kapillaren Kanalsystems mit einer z.B. Y-förmigen Verzweigung, die sich in Fließrichtung der Suspension hinter der Meßstelle befindet. In jedem Arm der Y-Verzweigung befindet sich ein mikroskopisch kleines Luftventil. An Piezo-Membranen befestigte Stößel mit kleinen Kolben öffnen und schließen diese Ventile entsprechend der Sortierentscheidung, die aufgrund jedes einzelnen Meßwertes der Zellen getroffen wird. Das Öffnen eines Ventils führt in dem System, das mit Vakuum betrieben wird, zum Einströmen von Luft in den betreffenden Arm des Kanalsystems und damit zu einer Verringerung der Fließgeschwindigkeit. Bei richtiger Wahl der Verzögerungszeit, die zwischen der Messung einer Zelle und dem Öffnen eines Ventils liegt, kann erreicht werden, daß die interessierenden Zellen in den einen Ast und die nicht interessierenden Zellen in den zweiten Ast des Kapillarsystems fließen. Die Sortiervorrichtung kann mit einem oder zwei gegensinnig arbeitenden Ventilen betrieben werden.

Ein weitere, von Zöld vorgeschlagene, Sortiervorrichtung arbeitet ebenfalls mit einem geschlossenen sich verzweigenden Kapillarsystem, in dem die einzelnen Kanaläste durch elektrische Entladung zwischen Mikroelektroden und dadurch bewirkte "Gasbildung" mehr oder weniger verschlossen werden, um die interessierenden Zellen in den jeweils gewünschten Kanal zu lenken.

Bei dem Tröpfchen-Sortierer handelt es sich um ein offenes System, in dem mikroskopisch kleine, die Zellen enthaltende Tröpfchen (Nebeltröpfchengröße) im freien Fall an elektrisch geladenen Elektrodenplatten vorbeigeführt werden müssen. Zunächst ist es schwierig, die Zeit festzulegen, die zwischen dem Messen und dem Laden des sobald vom Flüssigkeitsstrom sich lösenden Tröpfchens vorgeht. Diese Zeit muß weitgehend empirisch ermittelt werden. Die Qualität des Sortiervorganges (Reinheit der Probe) muß umständlich dadurch ermittelt werden, daß die "sortierten" Zellen erneut gemessen werden.

Ein entscheidender weiterer Nachteil dieser Anordnung besteht darin, daß die mikroskopisch kleinen Tröpfchen zu einem beträchtlichen Teil sich nicht in der gewünschten Weise in das Auffanggefäß bewegen. Aufgrund komplizierter Ladungsverhältnisse der Tröpfchen einerseits und der Geräteteile andererseits, sowie wegen der Kleinheit der Tröpfchen und der Anfälligkeit durch Luftströmungen bewegt sich ein beträchtlicher Anteil der Tröpfchen in den Raum. Dies ist von größter Bedeutung, weil die Zellen i.a. mit fluoreszierenden Farbstoffen, die in der Regel mutagen und cancerogen sind, gefärbt sind oder radioaktive Stoffe (z.B. 3H-Thymidin) enthalten. Das sich bildende Aerosol mit derartigen markierten Zellen stellt eine reale Gefahr für das Bedienungspersonal dar, das sich durch Einatmen beträchlich kontaminieren kann.

Ein weiterer Nachteil solcher offener Sortiersysteme besteht darin, daß sich diese nicht über längere Zeit unter sterilen Bedingungen betreiben lassen. Dies wäre allerdings wichtig, weil die sortierten Zellen häufig das Ausgangsmaterial für neue Zellkulturen sein sollen.

Der Nachteil der von Kamentsky (US 3 827 555) vorgeschlagenen geschlossenen Anordnung besteht darin, daß nach jedem einzelnen Sortiervorgang, der je eine Störung des Zentralstrahles, d.h. eine Vermischung des Zentralstrahles mit dem Hüllstrom voraussetzt, eine vergleichsweise lange Zeit vergeht, bis sich der Zentralstrahl mit den Zellen wieder etabliert und stabilisiert hat. Außerdem ist die Aussonderung interessierender Zellen erheblich vom Zufall abhängig: nicht alle gewünschten Zellen bewegen sich durch eine Piezo-Störung weit genug von ehem. Zentralstrahl weg, um sicher aus der Peripherie des Flüssigkeitsstromes abgeführt werden zu können. Das System, das seit fast 20 Jahren bekannt ist, konnte nicht realisiert werden, es führt nicht zu brauchbaren Sortierergebnissen.

Die von Zöld vorgeschlagene Anordnung ist nicht geeignet, Zellen mit dem Ziel zu sortieren, diese weiter zu kultivieren. Zellen sind rel. fragil; sie verlieren durch die erforderlichen "Explosionen" ihre Vitalität. Das System ist zudem sehr aufwendig wegen der beträchlichen Entladungen, die kurzzeitig und mit hoher Frequenz erfolgen sollen. Die sich bildenden Gase müssen zudem schnell abgeführt werden; Gase würden wegen der Elastizität und der Neigung des Systems zu Eigenschwingungen den Sortierablauf stören.

In der Anordnung von Wiecorek et al. erweisen sich aus ähnlichen Gründen die eingeführten Luftmengen als nachteilig. Die Anordnung ist dadurch relativ langsam bzw. wegen der Luftelastizität träge und schwingungsanfällig. Die mikroskopisch kleinen Ventile sind schwer herzustellen, störanfällig und wartungsaufwendig, wenn man bedenkt, daß die Lufteintrittsschlitze im geöffneten Zustand nur eine Weite von einigen μm bis wenige 10 μm haben. Der Sortiervorgang erfordert eine immer wieder zu kontrollierende und zu korrigierende Feineinstellung der Weite der Lufteintrittsöffnungen. Die erforderliche Luftzufuhr erschwert einen sterilen Betrieb der Anordnung.

Der Erfindung liegt die Aufgabe zugrunde, ein Sortierverfahren und eine Vorrichtung bereitzustellen, die nicht mit den Nachteilen bekannter Systeme behaftet sind und in denen insbesondere Partikel in einem geschlossenen System steril, zuverlässig und schonend sortiert werden.

Gemäß der vorliegenden Erfindung wird diese Aufgabe gelöst durch ein Sortierverfahren der eingangs angegebenen Art, wie in Anspruch 1 definiert, das sich dadurch auszeichnet, daß die Druckwelle mittels eines Stößels, der direkt auf die Flüssigkeit wirkt, in einem der beiden Kanäle hinter der Verzweigung erzeugt wird, wodurch der die Partikel enthaltende Strom (Partikelstrom) an der Verzweigung für die Dauer des Partikeldurchgangs umgeleitet wird.

Eine Vorrichtung zur Durchführung dieses Verfahrens ist in Anspruch 5 angegeben.

Der Verzweigungswinkel liegt vorzugsweise zwischen 10° und 45°. Er kann aber mehr sein oder auch 0°, d.h. eine Trennwand wird den einzigen Kanal in einem Abfallkanal und einem Sortierkanal trennen.

In den zweiten Kanal fließt im Ruhezustand lediglich ein Teil des partikelfreien Hüllstromes. Die durch die Anregung der Piezosäule verursachte Verengung führt dazu, daß je nach Dauer des anliegenden Hochspannungssignals ein Teil der Partikel enthaltenden Flüssigkeitssäule in den Sortierkanal abgelenkt wird. Dies wiederholt sich bei jedem zu sortierenden Partikel bis zu 1000mal pro Sekunde.

Wenn sich der Stößel unter dem Niveau des Kanals befindet (z.B. in einem von dem Kanal abzweigenden Bildkanal), verursacht die Anregung der Piezosäule eine Druckwelle, die sich in beide Richtungen in dem der Piezosäule zugehörenden Kanal fortsetzt. Diese Druckwelle verursacht eine verzögerungsfreie Ablenkung des die Partikel enthaltenden Zentralstrahles in den Sortierkanal. Damit erfolgt eine sehr präzise und beliebig kurzzeitige Ablenkung des Partikelstromes in den Sortierkanal. Der Stößel ist hierbei dem Abfallkanal zugeordnet.

Von den beiden Effekten ist der zweite der dominierende. Dieser tritt sowohl dann auf, wenn sich das Stößelende unter dem Kanalboden befindet als auch dann, wenn der Stößel in den Kanal hineinreicht.

Der Vorgang läßt sich bis zu 1000mal pro Sekunde wiederholen, was einer Sortiergeschwindigkeit von 1000 Zellen/Sekunde entspricht.

Es ist auch möglich, diesen Vorgang dadurch zu steuern, daß man statt der spannungsabhängigen Längenausdehnung der Piezosäule oder anderer mechanischer Vorrichtungen z.B. eines Schrittmotors genau umgekehrt arbeitet: Von einem Dauer-Spannungsniveau ausgehend werden kurze Aussetz-Impulse generiert, die zu einer Verkürzung der Piezosäule führen. Das führt zu kurzzeitigen neg. Druckstößen, wodurch die Zellen in den gewünschten Kanal hineingesaugt werden. Hierzu muß sich der Stößel in dem Sortierkanal befinden. Aus Gründen der Schonung der Zellen und des sterilen Arbeitens ist es aber zweckmäßiger, mit Druckwellen zu arbeiten, die von der im Abfallkanal installierten Piezosäule kommen.

Die Vorrichtung der vorliegenden Erfindung besitzt die Vorteile, dass sie ein geschlossenes System aufweist und leicht sterilisierbar ist. Es verursacht keine Kontamination der Umgebung und keine Gefährdung des Personals. Da es keine Gase im System gibt, gibt es auch keine Elastizität. Es ist also schwingunanfällig und weist eine besonders schnelle Sortiergeschwindigkeit auf.

In der Praxis zeigte sich ein bemerkenswerter Vorteil: das System sortiert entweder richtig oder gar nicht - damit sind, abgesehen von statistichen Koinzidenzen bei zu grosser Zelldichte, Fehlsortierungen nicht möglich.

Die Wahl der Zeitverzögerung zwischen Messen und Ablenken (Hochspannungssignal) ist sehr einfach, da man im Mikroskopokular die abgelenkten Zellen einzeln zur Einstellung in Form eines Striches sieht. Wird richtig sortiert, ist der an gleicher Stelle im Bereich der Verzweigung liegende "Umlenkpunkt" der sortierten Zellen deutlich sichtbar an immer der gleichen Stelle. Im Unterschied zu anderen Systemen sind die Kanäle mit 100 bis 500 µm besonders weit - dadurch wenig störanfällig durch Schmutzpartikel.

Weitere Merkmale, Einzelheiten und Vorteile der Erfindung ergeben sich aus der folgenden Beschreibung einer bevorzugten Ausführungsform der Erfindung.

Der Erfindungsgegenstand wird nun anhand eines in den Zeichnungen dargestellten Ausführungsbeispiels erläutert. Die Zeichnungen zeigen in

Fig. 1 eine Perspektivansicht einer Partikelsortiervorrichtung.

Fig. 2 einen Teilschnitt durch eine Partikelsortiervorrichtung für die Verwendung von Auflicht-Fluoreszenz

Fig. 3 einen Teilschnitt durch eine Partikelsortiervorrichtung für die Verwendung von Durchlicht (Fluoreszenz, Absorption, Streulicht).

Fig. 4 eine schematische Aufsicht einer Partikelsortiervorrichtung

Fig. 5 & 6 schematische Aufsichten von Teilen von Partikelsortiervorrichtungen

Fig. 7 einer Seitenschnitt einer Partikelsortiervorrichtung

Fig. 8 & 9 schematische Darstellungen von der Sortierung einer Partikel

Fig. 10 eine schematische Darstellung einer Partikelsortiervorrichtung mit Vorrats- und Ausfuhrflüssigkeitsbehältern

Fig. 11 ein Histogramm von auf der Grundlage von unterschiedlichen DNS-Gehalten sortierten DNS-Zellen.

Das Ausführungsbeispiel wurde speziell für die Sortierung von Zellen mit verschiedenen DNS-Gehalten durch die Messung biochemischer Eigenschaften von Ehrlich-Ascites-Tumorzellen der Maus durch die Bestimmung des DNS-Gehaltes konzipiert. Diese Messung beruht darauf, dass die zu messenden Zellen nach Anfärbung mit dem fluoreszierenden Agens Fluoreszenzlicht aussenden, wenn sie in der Messanordnung mit kurzwelligem Licht angeregt werden.

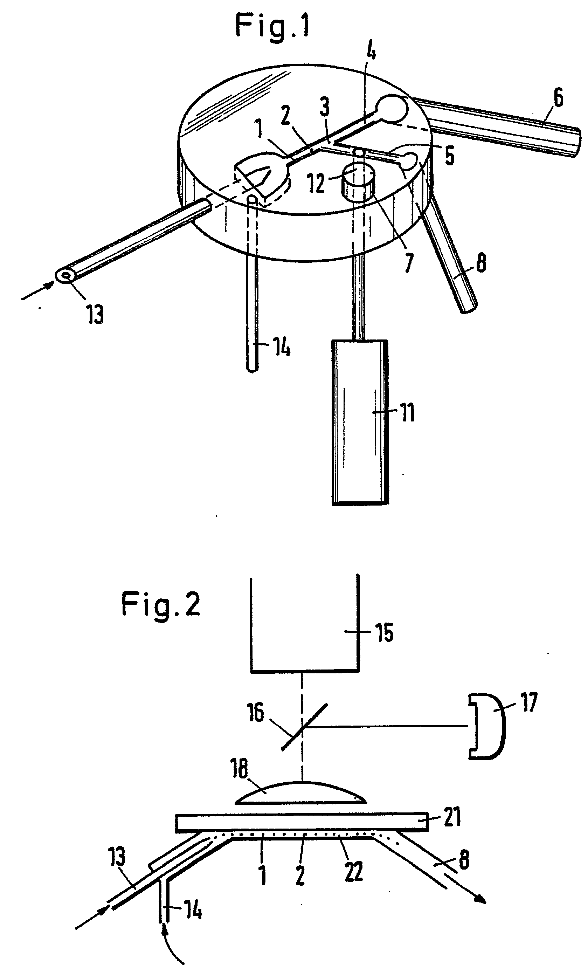

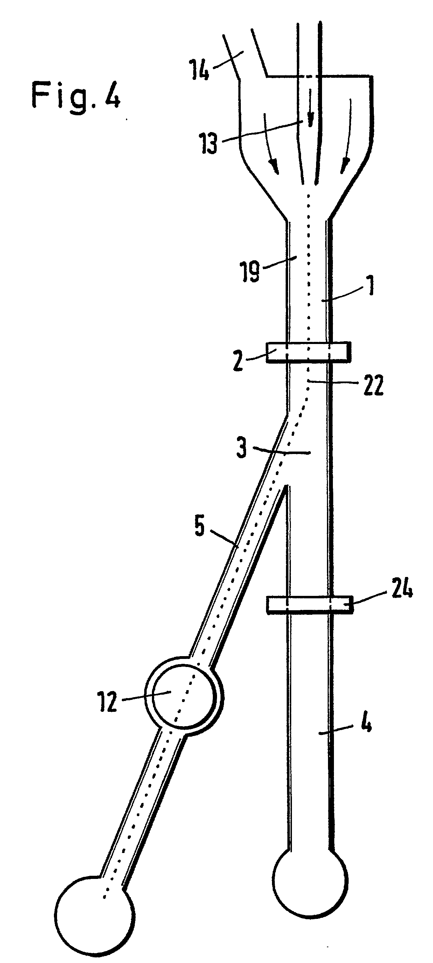

Wie aus Fig 1 und 4 ersichtlich, werden die fluoreszenzmarkierten Zellen durch einen Zuführkanal (13), der im allgemeinen aus einem dünnen Röhrchen mit einem Innendurchmesser von 100 bis 300 µm besteht, einem Messkanal (1) zugeführt. Der Messkanal mit einer Breite von 1 bis 5 mm weist eine zweite Zuführung (14) für teilchenfreies Wasser (oder eine andere Lösung als Dispersionsmedium für die Zellen) (4) auf. Wenn in dem Messkanal (1) sowohl die Zellsuspension durch das Röhrchen (13) als auch die teilchenfreie Flüssigkeit einfliessen, bildet sich ein laminarer Strom von Zellen, der umgeben ist von zellfreier Lösung. Dieser Strom ist im Messkanal (1) sehr stabil. Der Messkanal hat einen Querschnitt von z.B. 100 µm mal 200 µm, er ist also flach bei Betrachtung durch ein Messobjektiv (18). Der Messkanal weist eine Verzweigung (3) in einer Sortierkanal (4) und einen Abfallkanal (5) auf. In den Abfallkanal (5) strömt der Zellstrom, wenn er unbeinflusst ist. Die auszusortierenden Zellen werden in den Sortierkanal geleitet.

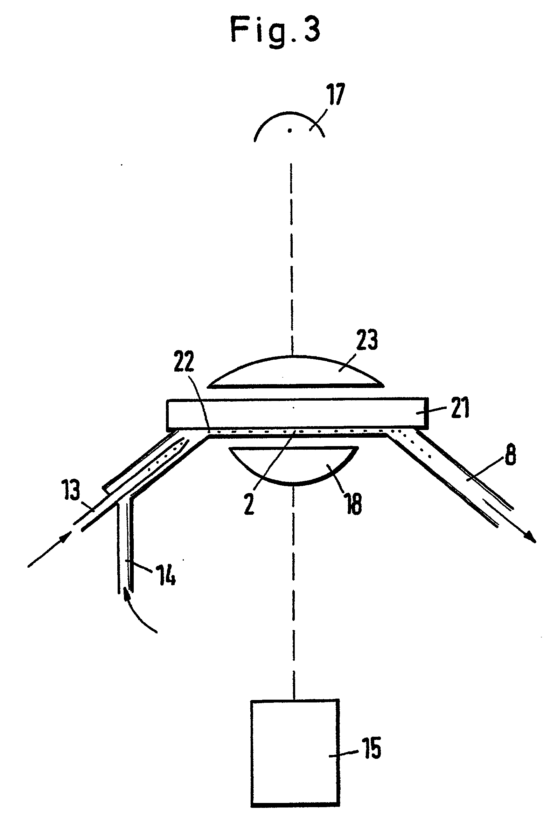

In Fliessrichtung kurz vor dieser Verzweigung befindet sich eine Messstelle (2), die durch das Messobjektiv beobachtet wird (Fig. 2,3). Im Bereich dieser Messstelle werden die Zellen, die sich einzeln durch sie hindurchbewegen,zur Fluoreszenz angeregt. Das Fluoreszenzlicht gelangt durch das Messobjektiv zu einem Photomultiplier (15) zur Messung der Intensität der jeder einzelnen Zelle zugeordneten Messsignale. Diese Messsignale werden mit elektronischen Mitteln registriert und klassifiziert.

Anstelle der Verwendung nur eines Objektivs für die Beleuchtung der Messstelle und für die Sammlung des Fluoreszenzlichtes (Auflichtfluoreszenzmessung) kann auch ein separates Objektiv für die Sammlung des Fluoreszenzlichtes verwendet werden (Durchlichtanordnung).

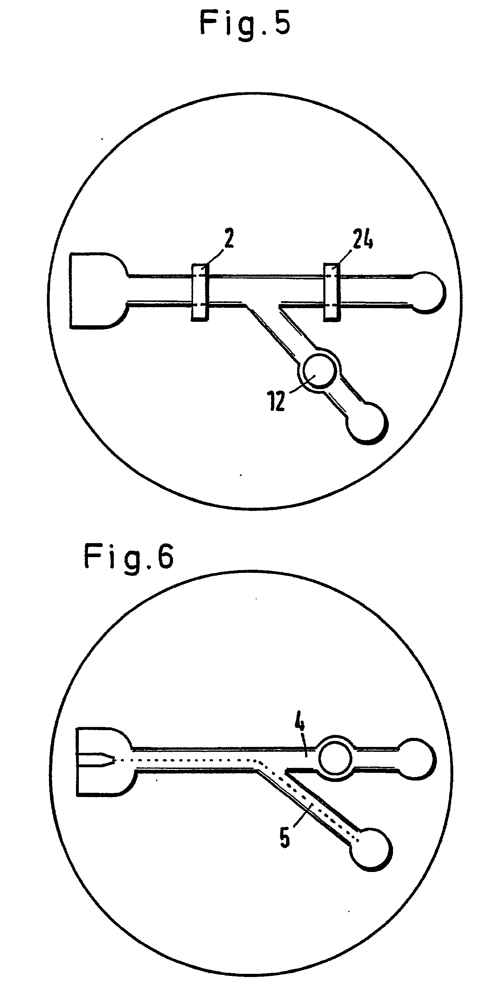

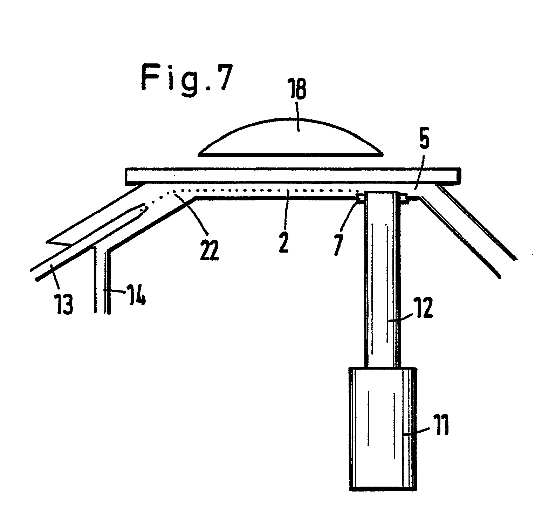

Am Abfallkanal (5) ist ein Druckwellengenerator in Form einer Piezosäule (11) angeordnet, die mit einem in den Kanal einschiebbaren Stössel (12) versehen ist (Fig. 5,7). Die Oeffnung, durch die der Stössel (12) in den Kanal (5) ragt, ist mit einer vakuumdichten Buchse (7) versehen. Je nachdem, ob die Piezosäule mit einem Signal angeregt wird oder nicht, ragt der Stössel (12) mehr oder weniger weit in den Kanal (5). Aufgrund vorgegebener Algorithmen bzw. an der Auswerteelektronik vorgegebener Signalfenster kann vorgewählt werden, welche Arten von Zellen mit bestimmten Eigenschaften aussortiert werden sollen. Immer dann, wenn eine solche Zelle gemessen wurde, trifft die Elektronik die Entscheidung, die Piezosäule (11) durchzuschalten.

Selbstverständlich wäre es auch möglich, den Druckwellengenerator am Sortierkanal (4) anzuordnen. Diese Alternative ist in Fig. 6 gezeigt. Hierzu muss sich der Stössel (12) der Piezosäule (11) in umgekehrter Richtung bewegen, so dass mit einer negativen Druckwelle (Sog) gearbeitet wird.

Zu beachten ist, daß der Flüssigkeitsstrom kontinuierlich in beide Kanäle fließt, damit der Laminarfluß erhalten bleibt. Bei völligem Verschließen des einen Kanals würde der Laminarstrom aufgelöst und sich der zentrale Partikelstrom mit dem Hüllstrom vermischen.

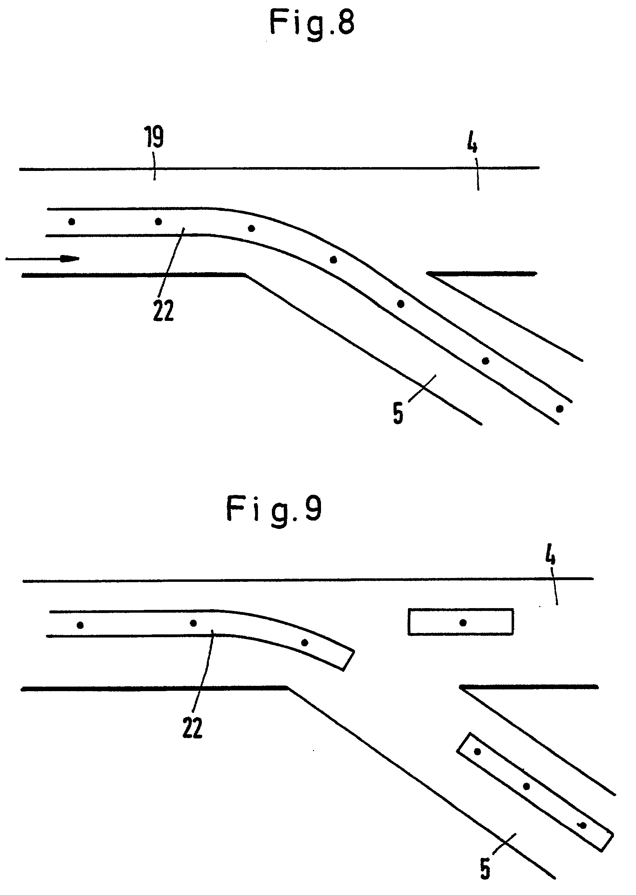

Wenn im Falle der Verwendung einer Druckwelle die Piezosäule kurzzeitig angeregt wird, kommt es zu einer kurzzeitigen Ablenkung des laminaren Partikelstromes in den Sortierkanal (4) (Fig. 8 und 9). Mit Hilfe geeigneter elektronischer Mittel (Zeitsteuerung) wird dafür Sorge getragen, dass die Piezosäule mit der richtigen Verzögerung durchgeschaltet wird, damit das immer genau dann erfolgt, wenn sich die zu sortierenden Zellen unmittelbar vor der Verzweigung befinden. Die Fliessgeschwindigkeit des laminaren Stromes beträgt bei diesem Ausführungsbeispiel etwa 0.20 bis 2 m/sec je nach angelegtem Druck oder Vakuum zum Transport der Ströme.

Entsprechend der gewünschten Fliessgeschwindigkeit wird die Verzögerungszeit zwischen der Messung der Zelleigenschaft und dem Durchschalten der Piezosäule variiert, sie liegt bei diesem Ausführungsbeispiel zwischen 20 und 200 microsec. Diese Zeit hängt auch davon ab, wie nahe die Messstelle vor der Verzweigung liegt. Fig. 9 zeigt im Vergleich zu Fig. 8, wie durch Einschaltung der Piezosäule eine kurze Flüssigkeitssäule aus dem Abfallkanalstrom in den Sortierkanal abgeleitet wird.

Im Sortierkanal (11) kann eine weitere Messstelle (24) angeordnet sein, die durch dasselbe Objektiv beleuchtet und beobachtet wird (Fig. 4,5). Das bedeutet, dass jede Zelle, die diese zweite Messstelle passiert, ein zweites Messsignal liefert. Da in diesen Kanal nur die aussortierten Zellen fliessen sollen, erhält man aus diese Weise die Messwerte der aussortierten Zellen, ohne

daß die aussortierte Probe in einem zweiten Meßvorgang erneut gemessen werden muß.

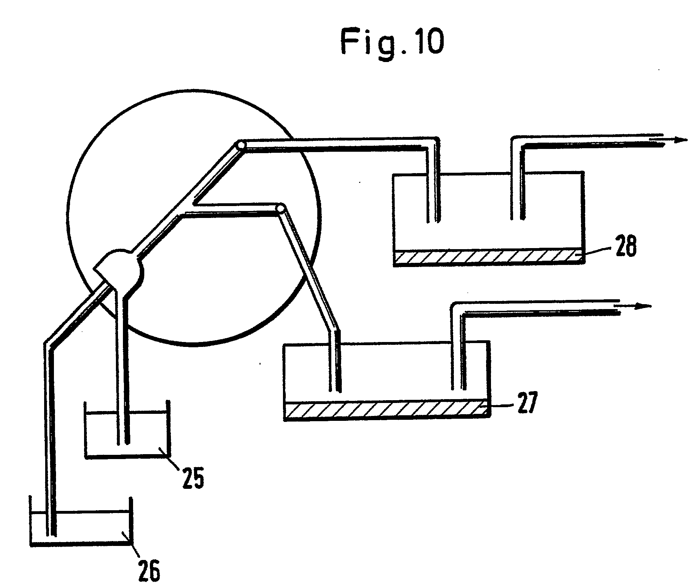

In Fig. 10 ist eine schematische Ansicht einer Partikelsortiervorrichtung gezeigt, bei der die einzelnen Flüssigkeitsbehälter in ihrer Anordnung zur Sortiervorrichtung gezeigt sind.

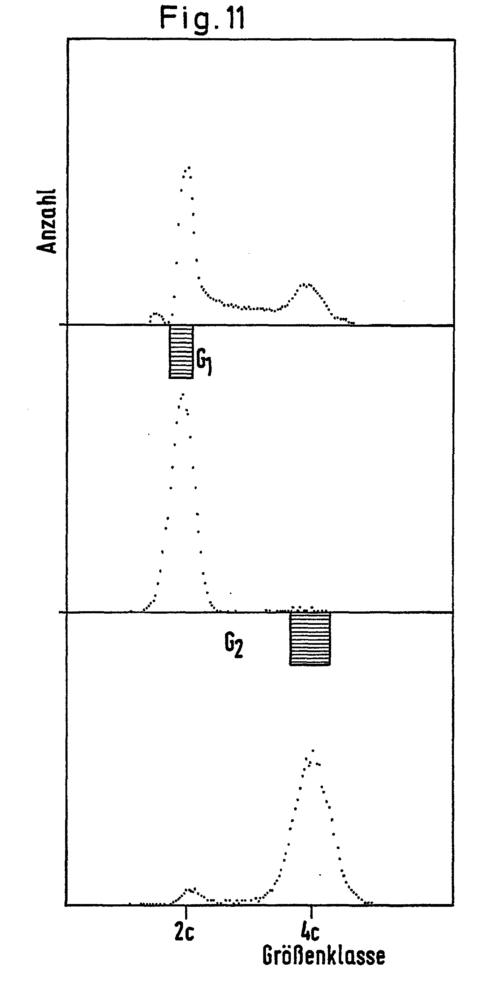

Fig. 11 zeigt das Ergebnis einer Sortierung verschiedener Größenklassen von DNA-Zellen. Fig. 11 oben zeigt die Anzahl aller Zellen (y-Achse) in ihrer Größenklassenverteilung (x-Achse). Wenn die Meßapparatur auf $G_1$ eingestellt ist, werden die zugehörigen Zellen dieser Größenklasse sortiert, bei Einstellung des Meßfensters auf $G_2$ die Zahl der diesem Meßwert zugehörigen Zellen.

Die Verteilung der mit dem Fenster $G_1$ aussortierten Zellen zeigt Fig. 11 Mitte, während die Verteilung der $G_2$-Zellen in Fig. 11 unten dargestellt sind.

Als Anwendungsgebiete ergeben sich insbesondere:

1. Sortierung unterschiedlicher Blutzellen, Leukämiezellen,

2. Sortierung unterschiedlicher Zellen aus Gewebekulturen

3. Sortierung unterschiedlicher Turmorzellen aus menschlichen Tumorbiopsien, um diese vom Pathologen begutachten zu lassen. Dies ist deshalb von Bedeutung, weil in vielen Fällen nur sehr wenige Tumorzellen in den Proben vorhanden sind und eine vorangehende Anreicherung derselben die Diagnose erleichtert. Besondere Bedeutung hat das im Rahmen der Krebsfrüherkennung bei Reihenuntersuchungen z.B. bei der Vaginalzytologie.

4. Aussortierung bestimmter mit Oberflächenmarkern versehener Zellen nach Markierung mit Antikörpern z.B. zum Zwecke der Züchtung von bestimmten Zellklonen im Rahmen der Gentechnologie.

5. Isolierung bestimmter Heferassen im Gärungsgewerbe und in der Biotechnologie.

6. Sortierung unterschiedlicher mikroskopisch kleiner Partikel in der Industrie, Farbenpigmente, pharmazeutische Industrie.

Die Methode ist insbesondere anwendbar bei allen Partikeln im Größenbereich von 1 μm bis einige 100 μm.

## Bezugszeichenliste

1 Messkanal
2 Messstelle
3 Y-Verzweigung
4 Sortierkanal
5 Abfallkanal
6 Ausgang für die sortierten Zellen
7 Vakuumdichte Buchse
8 Abfall - mit Saugflasche (Pumpe) verbunden
11 Piezosäule
12 Stössel
13 Einlass für Partikel-suspension (Zentralstrahl)
14 Zufuhr der Hüllstromlösung (Wasser)
15 Photomultiplier
16 Dichroitischer Spiegel (Lichtteiler)
17 Lichtquelle (UV oder Laser zum Fluoreszenzanregung)
18 Mess-Objektiv
19 Hülllösung
21 Deckglas
22 Partikelstrom
23 Kollektor
24 Zweite Messstelle
25 Wasservorrat
26 Zellvorrat
27 Abfall
28 Sortierte Zellen

## Patentansprüche

1. Verfahren zum automatischen Sortieren von mikroskopischen Partikeln, bei dem die Partikel in einer Flüssigkeit suspendiert durch einen geschlossenen Kanal geführt werden und dabei eine Meßstelle (2), an der die auszusortierenden Partikel Signale zur Erzeugung einer Druckwelle auslösen, und eine anschließende Verzweigung (3) passieren, dadurch gekennzeichnet, daß die Druckwelle in einem der beiden Kanäle hinter der Verzweigung (3) mittels eines Stößels (12), der direkt auf die Flüssigkeit wirkt, erzeugt wird, daß die Druckwelle sich in dem dem Stößel zugehörenden Kanal fortsetzt und an der Verzweigung (3) den Partikel enthaltenden Strom zu einem solchen Zeitpunkt und mit einer solchen Dauer umleitet, daß das auszusortierende Partikel, welches das Signal ausgelöst hat, in einen anderen Kanalzweig geleitet wird.

2. Sortierverfahren nach Anspruch 1, dadurch gekennzeichnet, daß die Druckwelle in dem Kanalzweig erzeugt wird, in den der unbeeinflußte Partikelstrom strömt, wodurch der Partikelstrom für die Dauer eines Partikeldurchgangs in den anderen Kanalzweig umgeleitet wird.

3. Sortierverfahren nach Anspruch 1, dadurch gekennzeichnet, daß die Druckwelle in dem Kanalzweig erzeugt wird, durch den die auszusortierenden Partikel strömen.

4. Sortierverfahren nach einem der Ansprüche 1–3, dadurch gekennzeichnet, daß der Partikelstrom von einem partikelfreien Hüllstrom (19) umgeben ist.

5. Sortiervorrichtung zur Durchführung des Verfahrens nach Anspruch 1 mit einem Zuführkanal (13) für den Partikelstrom (22), einem Meßkanal (1), einer im Meßkanal angeordneten Meßstelle (2), einer Verzweigung (3) des Meßkanals in einen Sortierkanal (4) und einen Abfallkanal (5) und einem Druckwellengenerator (11, 12), dadurch gekennzeichnet, daß der Druckwellengenerator als Stößel (12) ausgebildet ist, der direkt auf die Flüssigkeit wirkt, und bei einem durch das auszusortierende Partikel ausgelösten Signal eine Druckwelle in dem dem Stößel zugeordneten Kanal erzeugt, die an der Verzweigung des Meßkanals den Partikel enthaltenden Strom zu einem solchen Zeitpunkt und mit einer solchen Dauer umleitet, daß das auszusortierende Partikel, welches das Signal ausgelöst hat, in den Sortierkanal (4) umgeleitet wird.

6. Sortiervorrichtung nach Anspruch 5, dadurch gekennzeichnet, daß sie eine Hüllstromzufuhreinrichtung (14) aufweist, an welcher der Partikelstrom in einen Hüllstrom fließt.

7. Sortiervorrichtung nach den Ansprüchen 5 oder 6, dadurch gekennzeichnet, daß der Druckwellengenerator im Sortierkanal (4) angeordnet ist.

8. Sortiervorrichtung nach den Ansprüchen 5 oder 6, dadurch gekennzeichnet, daß der Druckwellengenerator im Abfallkanal (5) angeordnet ist.

9. Sortiervorrichtung nach einem der Ansprüche 5–8, dadurch gekennzeichnet, daß sie eine zweite Meßstelle (24) im Sortierkanal (4) aufweist, um die Sortierfunktion zu kontrollieren.

10. Sortiervorrichtung nach einem der Ansprüche 5–9, dadurch gekennzeichnet, daß der Druckwellengenerator eine mit einem Stößel (12) versehene Piezosäule (11) ist.

11. Sortiervorrichtung nach einem der Ansprüche 5–10, dadurch gekennzeichnet, daß sich der Druckwellengenerator in einem Abzweigkanal des entsprechenden Zweigkanals befindet.

**Claims**

1. Process for the automatic sorting of microscopic particles, in which the particles, suspended in a liquid, are passed through a closed channel and pass through a measuring station (2) where, the particles to be sorted out, trigger signals for producing a pressure wave, and then a following branch (3), characterized in that the pressure wave is produced in one of the two channels behind branch (3) by means of a plunger (12), which acts directly on the liquid, that the pressure wave is propagated in the channel belonging to plunger (12) and on the branch (3) the flow containing the particles is diverted in such a time and for such a duration that the particle to be sorted out and which has triggered the signal is deflected into another channel branch.

2. Sorting process according to claim 1, characterized in that the pressure wave is produced in the channel branch in which flows the uninfluenced particle flow, so that the particle flow is diverted for the duration of a particle passage into the other channel branch.

3. Sorting process according to claim 1, characterized in that the pressure wave is produced in the channel branch through which flow the particles to be sorted out.

4. Sorting process according to one of the claims 1 to 3, characterized in that the particle flow is surrounded by a particle-free envelope flow (19).

5. Sorting apparatus for performing the process according to claim 1 with a supply channel (13) for the particle flow (22), a measuring channel (1), a measuring station (2) located in the measuring channel, a branch (3) of the measuring channel into a sorting channel (4) and a discharge channel (5) and a pressure wave generator (11, 12), characterized in that the pressure wave generator is constructed as a plunger (12), which acts directly on the liquid and which in the case of a signal triggered by the particle to be sorted out produces a pressure wave in the channel associated with the plunger and which diverts the flow containing the particle at such a time and for such a duration at the branch of the measuring channel that the particle to be sorted out and which has triggered the signal is diverted into sorting channel (4).

6. Sorting apparatus according to claim 5, characterized in that it has an envelope flow supply device (14), to which the particle flow flows in an envelope flow.

7. Sorting apparatus according to claims 5 or 6, characterized in that the pressure wave generator is arranged in the sorting channel (4).

8. Sorting apparatus according to claims 5 or 6, characterized in that the pressure wave generator is arranged in the discharge channel (5).

9. Sorting apparatus according to one of the claims 5 to 8, characterized in that it has a second measuring station (24) in sorting channel (4), in order to check the sorting function.

10. Sorting apparatus according to one of the claims 5 to 9, characterized in that the pressure wave generator is a piezoelectric column (11) provided with a plunger (12).

11. Sorting apparatus according to one of the claims 5 to 10, characterized in that the pressure wave generator is located in a branching channel of the corresponding channel.

**Revendications**

1. Procédé de triage automatique de particules microscopiques, selon lequel les particules en suspension dans un liquide sont acheminées le long d'un canal fermé et de là à travers une zone de mesure (2) où les particules à trier déclenchent des signaux générant une onde de pression, et passent par une bifurcation contiguë (3), caractérisé en ce que l'onde de pression est générée dans l'un des deux canaux et en aval de la bifurcation (3) au moyen d'un poussoir (12) qui agit directement sur le liquide, en ce que l'onde de pression se propage dans le canal associé au poussoir (12) et, à hauteur de la bifurcation (3), détourne le courant renfermant les particules à instant tel et sur une durée telle que la particule à trier qui a déclenché le signal, est dirigée dans une autre branche de canal.

2. Procédé de triage selon la revendication 1, caractérisé en ce que l'onde de pression est produit dans la branche du canal, dans laquelle le courant de particules non soumis à influence s'écoule, ce par quoi le courant de particules est détourné dans l'autre branche du canal pendant la durée du passage d'une particule.

3. Procédé de triage selon la revendication 1, caractérisé en ce que l'onde de pression est générée dans la branche du canal, dans laquelle les particules à trier s'écoulent.

4. Procédé de triage selon l'une des revendications 1 à 3, caractérisé en ce que le courant de particules est entouré d'un courant enveloppant (19) exempt de particules.

5. Dispositif de triage pour la mise en œuvre du procédé selon la revendication 1, comportant un canal d'amenée (13) pour le courant de particules (22), un canal de mesure (1), une zone de mesure (2) située dans le canal de mesure, une bifurcation (3) du canal de mesure se prolongeant par un canal de triage (4) et un canal de rejet (5) et un générateur d'ondes de pression (11, 12), caractérisé en ce que le générateur d'ondes de pression est réalisé sous la forme d'un poussoir (12) qui agit directement sur le liquide et qui, sous l'application d'un signal déclenché par la particule à tirer produit, dans le canal associé au poussoir, une onde de pression qui, à hauteur de la bifurcation du canal de mesure, détourne le courant renfermant les particules à un instant tel et sur une durée telle que la particule à trier qui a déclenché le signal, est déviée dans le canal de triage (4).

6. Dispositif de triage selon la revendication 5, caractérisé en ce qu'il comporte un organe d'amenée d'un courant enveloppant (14) à hauteur duquel le courant de particules circule dans un courant enveloppant.

7. Dispositif de triage selon la revendication 5 ou 6, caractérisé en ce que le générateur d'ondes de pression est disposé dans le canal de triage (4).

8. Dispositif de triage selon la revendication 5 ou 6, caractérisé en ce que le générateur d'ondes de pression est disposé dans le canal de rejet (5).

9. Dispositif de triage selon l'une des revendications 5 à 8, caractérisé en ce qu'il présente dans le canal de triage (4) une deuxième zone de mesure (24) pour le contrôle de la fonction de triage.

10. Dispositif de triage selon l'une des revendications 5 à 9, caractérisé en ce que le générateur d'ondes de pression est une colonne piézo-électrique (11) pourvue d'un poussoir (12).

11. Dispositif de triage selon l'une des revendications 5 à 10, caractérisé en ce que le générateur d'ondes de pression se trouve dans un canal en dérivation sur la branche correspondante du canal.

# Fig.1

# Fig.2

# Fig. 3

Fig. 4

EP 0 177 718 B1

# Fig.5

# Fig.6

Fig.7

## Fig.8

## Fig.9

# Fig.10

# Fig. 11

Anzahl

G₁

G₂

2c    4c
Größenklasse